# EUROPEAN PATENT SPECIFICATION

(11) **EP 3 466 578 B1**
(45) Date of publication and mention of the grant of the patent: **19.07.2023**
(21) Application number: 17802784.3
(22) Date of filing: 23.05.2017
(51) Int. Cl.: B23D 29/00, B25F 5/00, B26B 15/00, H02G 1/00, B23D 36/00

(54) **POWER TOOL**
ELEKTROWERKZEUG
OUTIL ÉLECTRIQUE

(30) Priority: 24.05.2016 JP 2016103779; 19.05.2017 JP 2017099558
(43) Date of publication of application: 10.04.2019
(73) Proprietor: Maxell Izumi Co., Ltd., Nagano 399-8721 (JP)
(72) Inventor: Ohta, Koji, Kyoto-shi Kyoto 601-8520 (JP); HATTORI, Naoki, Kyoto-shi Kyoto 601-8520 (JP); HANEISHI, Isao, Matsumoto-shi Nagano 399-8721 (JP)
(74) Representative: Grünecker Patent- und Rechtsanwälte PartG mbB
(86) International application number: PCT/JP2017/019138
(87) International publication number: WO 2017/204198

(56) References cited:
- EP-A1- 0 812 044
- EP-A1- 1 350 428
- EP-A1- 2 407 277
- WO-A1-2012/088695
- FR-A3- 2 611 549
- JP-A- H0 386 417
- JP-A- H08 294 585
- JP-A- 2005 224 122
- JP-U- S63 111 872
- US-A- 5 360 213
- US-A- 5 642 566
- US-A1- 2010 269 355

## Description

### [Technical Field]

The present invention relates to power tools and, in particular, power tools that cut objects. Such a power tool is known from US5642566A.

### [Background Art]

Hydraulic or battery-powered power tools-more specifically, electrical cable cutters are used when cutting cables during electrical construction work, or steel bars and the like at ironworks, building construction sites, or the like.

These types of electrical cable cutters need to have their cutter (blade) used to cut objects returned to its standby position prior to the start of the cutting action, after the cutting action has ended.

With regard to this problem, a hydraulic cable cutter is proposed that is only turned on while its switch is being pressed, and when the switch is released, the switch valve is switched automatically and the cutter opens again (see, for example, JP H06 75617 U). Moreover, a cable cutter with a dust-proof brush is proposed that includes a lock knob disposed between a forward switch lever that causes its electric motor to go on forward drive, and a reverse switch lever that causes its electric motor to go on reverse drive, with each switch lever being put in the on state by being pressed simultaneously with the lock knob (see, for example, JP H07 3918 U).

From WO 2012/088695 A, a powered cutting tool is known, which is designed e. g. as secateur or pruning shear to cut vegetation such as shrub or tree branches. For this purpose, the cutting tool of WO 2012/088695 A comprises a cutting head with first and second cutting members. Furthermore, this well-known cutting tool is provided with a main switch. This main switch is configured so that a motor rotates in a first direction to move the first cutting member from its first angular position to its second angular position in response to a user input, i. e. depression of the main switch. At any point where the main switch is released, the power tool will stop.

FR 2 611 594 A3 discloses a motorized shear, which is used, for example, for cutting metal cables, in particular electrical cables, or for trimming plants. This prior art shear comprises two jaws assembled to a support body, at least one of which is articulated to the support body in such a way that the two jaws can be brought from an open standby position to a closed cutting position and vice versa. Moreover, this prior art shear comprises an electric motor supply battery, housed inside the support body and a control push-button provided on the support body near a handle. When the operator releases the control push-button after performing an operation, the shear's jaws automatically return to the open standby position so that they are ready for the next operation.

According to a method for controlling the opening sequences of cutting heads described in EP 2 407 277 A1, a time relay is used to set an opening time of a check valve and thus the opening time of the blades of the cutting head so as to obtain a desired opening slightly wider than the dimension of the cross-section of the object to be cut. Since the adjustable time relay allows the opening between the blades of cutting head to be adjusted to the dimension of the cross-section to be cut, idle times and energy waste can be minimized. The opening time to achieve this adjusted opening can be determined by means of an empirical table.

### [Summary of Invention]

### [Technical Problem]

However, in the invention according to JP H06 75617 U, the cutter would open when the switch is released, which could lead to a decrease in work efficiency. Moreover, in order to reduce this decrease in work efficiency, the operator had to continuously keep the switch pressed until the cutting action had ended, which placed a burden on the operator. Furthermore, in the invention according to JP H07 3918 U, since the forward and reverse switch levers are separate, the operator had to put the reverse switch lever in the on state each time to return the cutter to the standby position prior to the start of the cutting action, after the cutting action had ended, which placed a burden on the operator.

The present invention aims to solve the above problems by providing a power tool that reduces a decrease in work efficiency and reduces the burden on the operator.

### [Solution to Problem]

According to the present invention, this aim is achieved by the provision of a power tool having the features specified in independent claim 1. Preferred embodiments of the present invention are described in the dependent claims.

A power tool according to the present invention comprises a cutting unit comprising the features of claim 1.

### [Advantageous Effects of Invention]

The present invention provides a power tool that reduces a decrease in work efficiency and reduces the burden on the operator.

### [Brief Description of Drawings]

[FIG. 1]

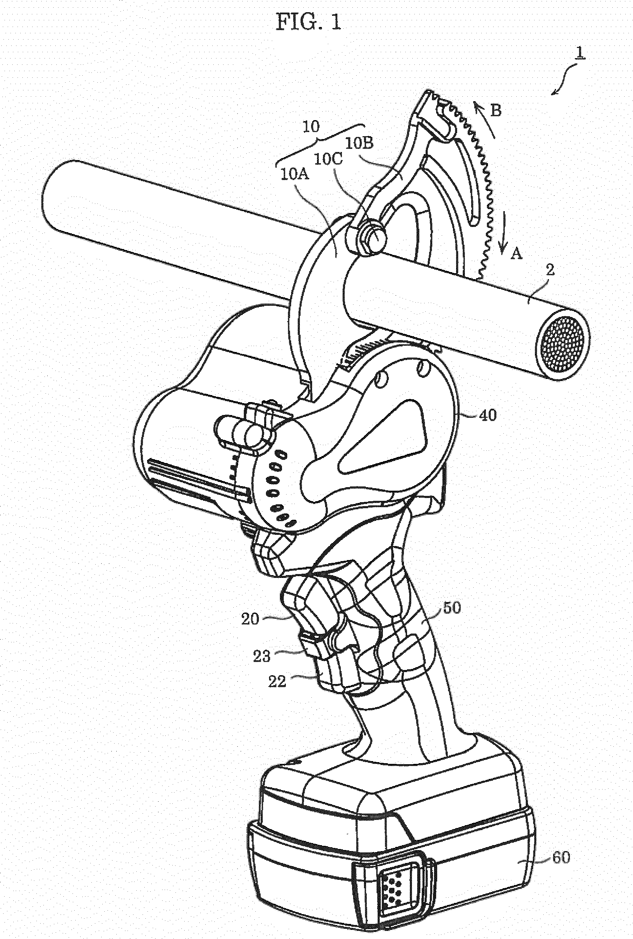

   FIG. 1 is an outline diagram showing a configuration of electrical cable cutter 1 according to an embodiment in the present invention (first mode).
[FIG. 2]

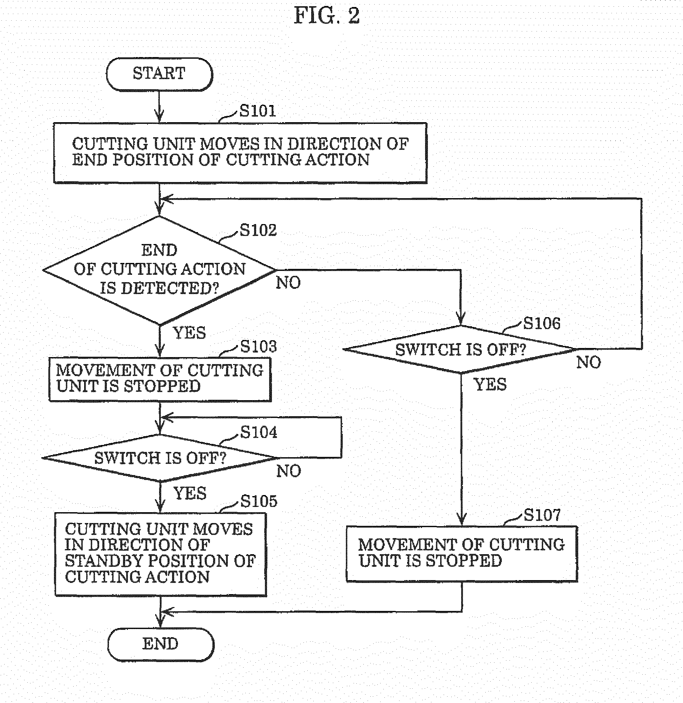

   FIG. 2 is a flowchart showing an example of a cutting operation of electrical cable cutter 1 in FIG. 1.
[FIG. 3]

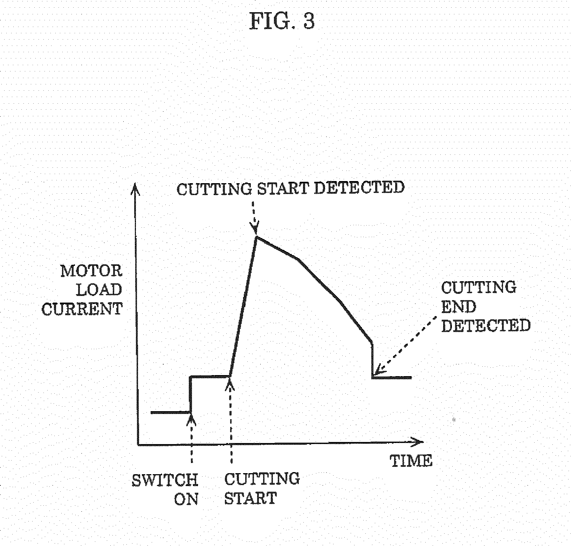

   FIG. 3 is an outline diagram for describing an example of detecting an end of the cutting action of electrical cable cutter 1 in FIG. 1.
[FIG. 4]

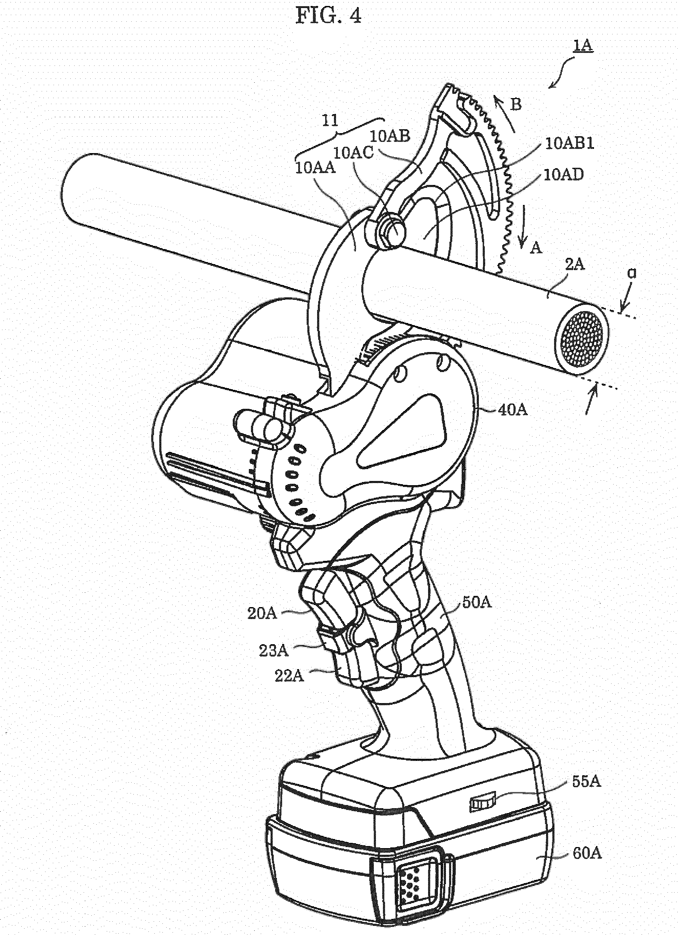

   FIG. 4 is an outline diagram showing a configuration of electrical cable cutter 1A according to another embodiment in the present invention (second mode).
[FIG. 5]

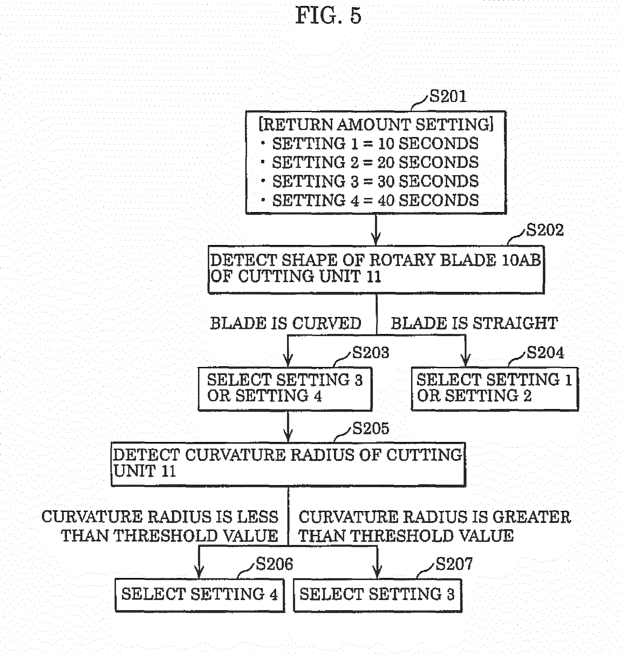

   FIG. 5 is a flowchart showing an example of selecting between a plurality of preset return amounts based on information about cutting unit 11.
[FIG. 6]

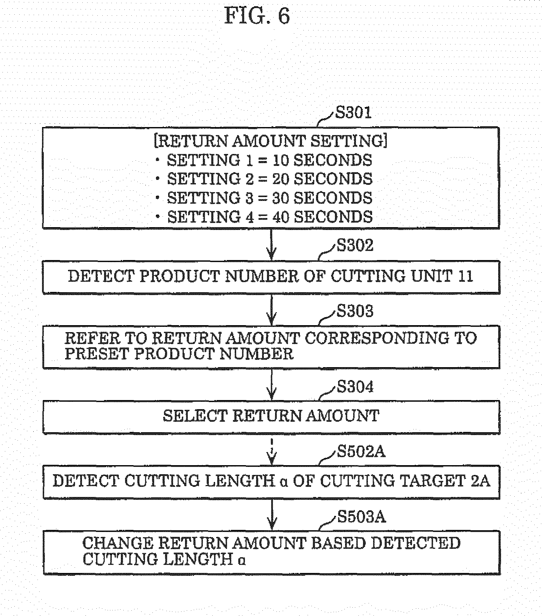

   FIG. 6 is a flowchart showing another example of selecting between the plurality of preset return amounts based on information about cutting unit 11.
[FIG. 7]
   FIG. 7 is a flowchart showing another example of selecting between the plurality of preset return amounts based on information about cutting unit 11.
[FIG.
   FIG. 8 is a flowchart showing an example of selecting between the plurality of preset return amounts based on information about cutting target 2A.
[FIG. 9]

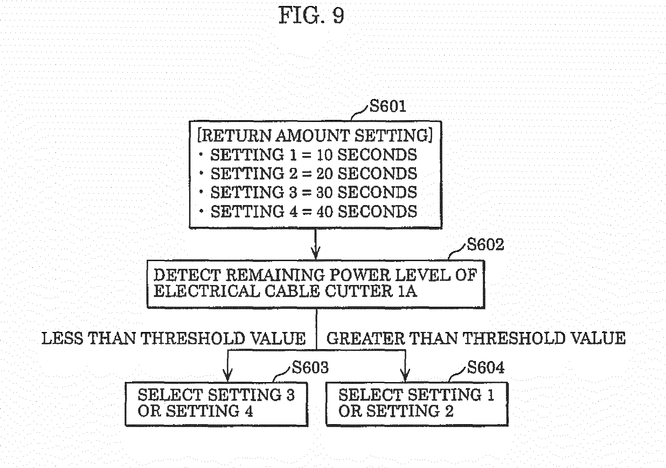

   FIG. 9 is a flowchart showing an example of selecting between the plurality of preset return amounts based on remaining power level of electrical cable cutter 1A.
[FIG. 10]

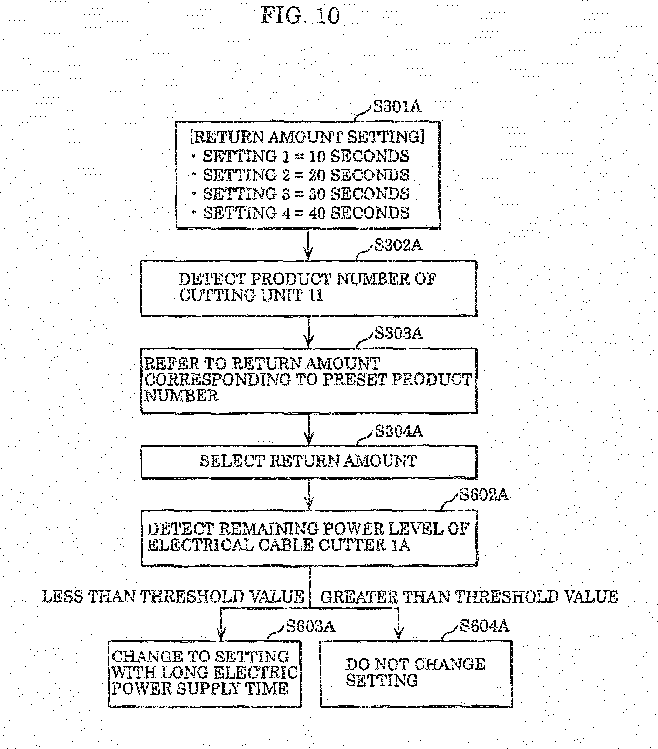

   FIG. 10 is a flowchart showing an example of selecting between the plurality of preset return amounts based on information about cutting unit 11 and the remaining power level.
[FIG. 11]

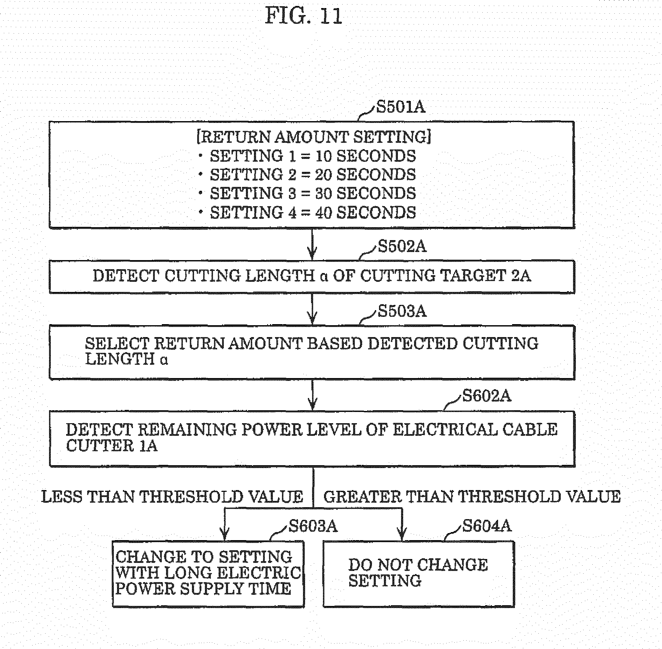

   FIG. 11 is a flowchart showing an example of selecting between the plurality of preset return amounts based on information about cutting target 2A and the remaining power level.
[FIG. 12]

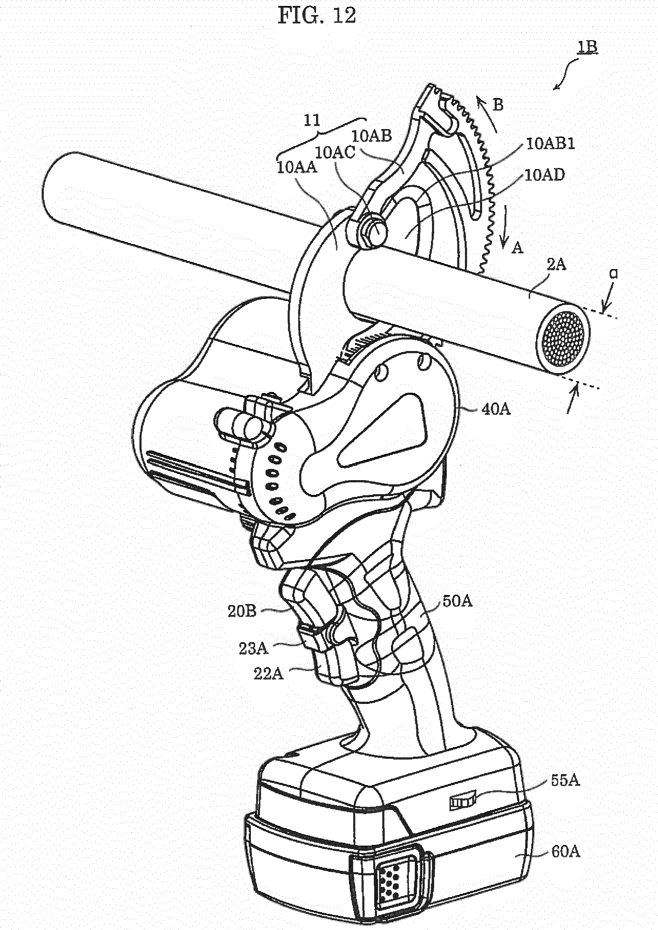

   FIG. 12 is an outline diagram showing a configuration of electrical cable cutter 1B according to a different embodiment in the present invention (third mode).
[FIG. 13]

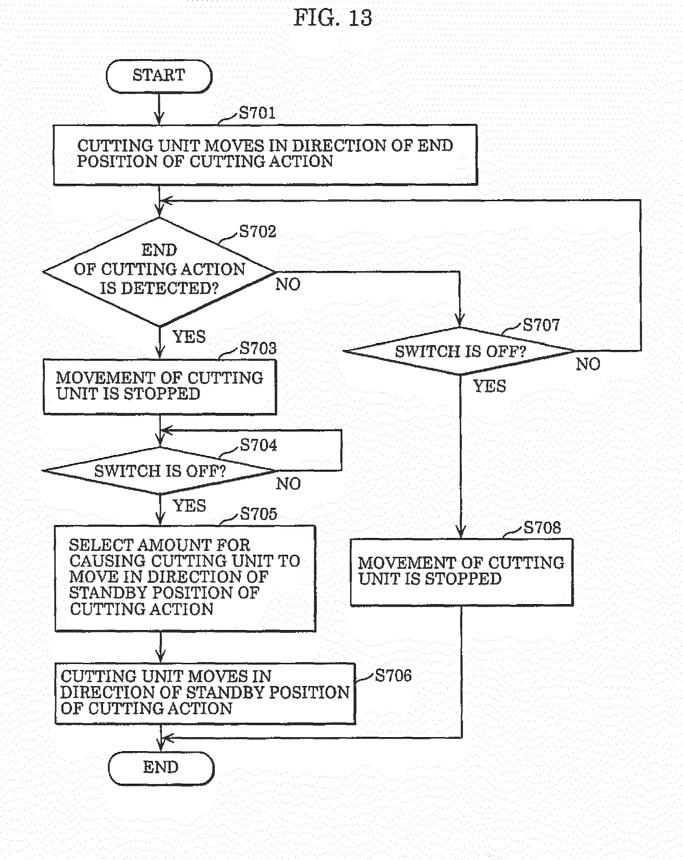

   FIG. 13 is a flowchart showing an example of the cutting action of electrical cable cutter 1B in FIG. 12.
[FIG. 14]

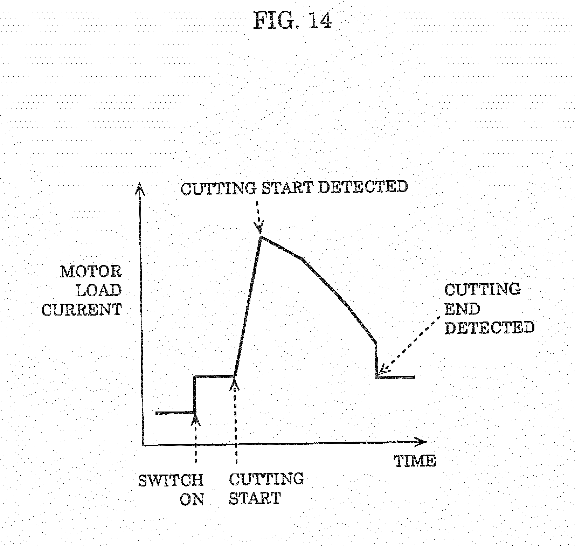

   FIG. 14 is an outline diagram for describing an example of detecting an end of the cutting action of electrical cable cutter 1B in FIG. 12.

### [Description of Embodiments]

### [First Mode]

Hereinafter, an electrical cable cutter according to an embodiment (a first mode) of a power tool in the present invention will be described with reference to the drawings. Note that each of the embodiments described below shows a preferred specific example in the present invention. Numerical values, shapes, materials, components, placement and connection of the components, the processes of controllers and their order, and the like are mere examples and are not intended to limit the present invention. Moreover, components in the following embodiments not mentioned in any of the independent claims that define the broadest concepts are described as optional elements. Note that the following drawings are schematic diagrams and do not necessarily provide strictly accurate illustrations.

A configuration of electrical cable cutter 1 according to the present embodiment will be described concretely below. FIG. 1 is an outline diagram showing the configuration of electrical cable cutter 1 according to the present embodiment.

As illustrated in FIG. 1, electrical cable cutter 1 includes cutting unit 10 that performs a cutting action, and cutting action input unit 20 for turning the cutting action on and off. Moreover, cutting action input unit 20, when turned on, causes cutting unit 10 to move in the direction of an end position of the cutting action (direction A in FIG. 1), and when turned off, causes cutting unit 10 to stop moving in the case where the cutting action has not ended at the time when the cutting action input unit is turned off, and to move in the direction of a standby position prior to the start of the cutting action (direction B in FIG. 1) in the case where the cutting action has ended at the time when the cutting action input unit is turned off.

Note that "the direction of an end position of the cutting action" is the direction toward the end position of the cutting action when cutting unit 10 cuts cutting target 2, that is, the direction in which cutting unit 10 cuts cutting target 2. Moreover, "the direction of a standby position prior to the start of the cutting action" is the direction toward a start position of the cutting action when cutting unit 10 cuts cutting target 2, that is, the direction opposite to the direction in which cutting unit 10 cuts cutting target 2.

In this manner, in electrical cable cutter 1 according to this embodiment of the power tool in the present invention, even when cutting action input unit 20 is turned off before the cutting action performed on cutting target 2 has ended, movement of cutting unit 10 in the direction of the end position of the cutting action is stopped and cutting unit 10 does not move in the direction of the standby position prior to the start of the cutting action, and thus the previously mentioned decrease in work efficiency can be reduced. Moreover, in electrical cable cutter 1, since cutting unit 10 automatically moves in the direction of the standby position prior to the start of the cutting action, after the cutting action has ended, the operator does not have to put a reverse switch lever in the on state each time to return the cutter to the standby position prior to the start of the cutting action. Therefore, the burden on the operator can be reduced.

Cutting unit 10 is coupled to an upper portion of a resin (plastic) housing 40, and includes, for example, fixed blade 10A fixed to an end portion of housing 40 using a commonly-known means not illustrated in the drawings, and rotary blade 10B that is substantially fan-shaped and rotatably connected at approximately the center of curvature of the arc of this fan shape by connector 10C disposed on an end portion of fixed blade 10A.

Included inside housing 40 is a commonly-known drive mechanism ((i) including, for example, an electric motor as illustrated in Japanese Patent No. 3780391, a clutch mechanism driven by a driving gear of the electric motor, a planetary gear deceleration mechanism driven via the clutch mechanism, and a driving gear that is connected to the planetary gear deceleration mechanism and protrudes from the end portion of housing 40, and (ii) in which a plurality of constrained gears, which are driven by the driving gear of the planetary gear deceleration mechanism, sequentially mesh with gear teeth formed on the outer edge of the arc of the rotary blade and cause the rotary blade to rotate about the axis, are disposed along the rotation trajectory of the outer edge of this rotary blade) not illustrated in the drawings that drives the movement of cutting unit 10 (rotation of rotary blade 10B in the present embodiment).

Electrical cable cutter 1 according to the present embodiment cuts cutting target 2, such as a cable, by moving cutting unit 10 driven by the electric motor. Note that the driving power of the electric motor is, for example, supplied from battery cartridge 60 detachably mounted on handle 50 which is disposed across housing 40 from cutting unit 10. Battery cartridge 60 is detachably mounted on a side of handle 50 which is opposite to the side facing housing 40.

Cutting action input unit 20 is, for example, disposed on an outer surface of handle 50.

In the present embodiment, by turning on (preferably pressing) cutting action input unit 20, the drive mechanism is activated and cutting unit 10 moves in the direction of the end position of the cutting action. Moreover, by turning off (preferably releasing from the pressed state) cutting action input unit 20, movement of cutting unit 10 in the direction of the end position of the cutting action is stopped by deactivating the drive mechanism (more specifically, stopping the power supply from battery cartridge 60 to the electric motor) in the case where the cutting action has not ended at the time when the cutting action input unit is turned off. Moreover, when cutting action input unit 20 is off, cutting unit 10 is caused to move in the direction of the standby position prior to the start of the cutting action in the case where the cutting action has ended, by reversing the electric motor in the drive mechanism.

As illustrated in FIG. 1, electrical cable cutter 1 according to the present embodiment further includes, aside from cutting action input unit 20, reverse input unit 22 which, by being turned on (preferably being pressing) reverses the electric motor in the drive mechanism to thereby cause cutting unit 10 to move in the direction of the standby position prior to the start of the cutting action, and by being turning off (preferably by being released from the pressed state) stops the movement in the direction of the standby position.

By further including this reverse input unit 22, a decrease in work efficiency can be kept to a minimum since the operator can personally adjust the movement amount in the direction of the standby position of cutting unit 10 even when some sort of malfunction occurs during the cutting action.

Moreover, electrical cable cutter 1 may further include lock knob 23 that puts one of cutting action input unit 20 and reverse input unit 22 in the on state by being pressing simultaneously with the one of cutting action input unit 20 and reverse input unit 22. By including this lock knob 23, the safety of electrical cable cutter 1 during operation can be further improved.

As previously mentioned, the detection of the end of the cutting action of electrical cable cutter 1 according to the present embodiment is performed through the motor load current in the drive mechanism.

FIG. 2 is a flowchart showing an example of the cutting action of electrical cable cutter 1 according to the present embodiment.

As illustrated in FIG. 2, in the present embodiment, by turning on cutting action input unit 20, cutting unit 10 first moves from the standby position prior to the start of the cutting action in the direction of the end position of the cutting action, and thereby cuts cutting target 2 (S101). Next, the end of the cutting action performed on cutting target 2 is detected (S102). When the end of the cutting action performed on cutting target 2 is detected in S102 ("Yes" in FIG. 2), movement of cutting unit 10 in the direction of the end position of the cutting action (S103) is stopped. Subsequently, it is determined whether cutting action input unit 20 (switch in FIG. 2, same hereinafter) is turned off (S104). Next, when it is determined that cutting action input unit 20 is turned off in S104 ("Yes" in FIG. 2), cutting unit 10 is caused to move in the direction of the standby position prior to the start of the cutting action (S105). Moreover, when it is determined that cutting action input unit 20 is not turned off in S104 ("No" in FIG. 2), S103 (stoppage of movement of cutting unit 10) is continued until cutting action input unit 20 is turned off. However, when the end of the cutting action performed on cutting target 2 is not detected in S102 ("No" in FIG. 2), it is determined next whether cutting action input unit 20 is turned off (S106). When it is determined that cutting action input unit 20 is turned off in S106 ("Yes" in FIG. 2), cutting unit 10 is caused to stop moving in the direction of the end position of the cutting action (S107). Moreover, when it is determined that cutting action input unit 20 is not turned off in S106 ("No" in FIG. 2), movement of cutting unit 10 in the direction of the end position of the cutting action is continued until the end of the cutting action is detected in S102.

In the cutting by electrical cable cutter 1 according to the present embodiment, the operator, for example, holds handle 50 with battery cartridge 60 mounted thereon with one hand, and places cutting target 2 between fixed blade 10A and rotary blade 10B. The cutting action is performed by turning on cutting action input unit 20.

With this, rotary blade 10B is pulled into fixed blade 10A by the drive mechanism and cutting target 2 can be cut.

In this manner, in electrical cable cutter 1 according to the present embodiment, cutting unit 10 is caused to move in the direction of the standby position prior to the start of the cutting action, without having to operate reverse input unit 22 in the case where the cutting action has ended.

Note that, in this case, electrical cable cutter 1 preferably further includes a movement amount adjuster not illustrated in the drawing for adjusting the movement of cutting unit 10 in the direction of the standby position.

This movement amount adjuster is, for example, designed to enable the movement amount in the direction of the standby position to be adjusted freely through a dedicated dial and the like. The movement amount adjuster includes an adjustment circuit that adjusts the power supply time to the drive mechanism when cutting unit 10 is moving in the direction of the standby position.

With this, since the operator can freely set the movement amount (return amount) of cutting unit 10 in the direction of the standby position, work efficiency can be improved when cutting a cable with a small internal diameter after having cut a cable with a large internal diameter.

Note that the movement amount adjuster may be capable of setting the power supply time at a plurality of settings (aperture amount at multiple gradations) through the adjustment circuit. In this case, the movement amount adjuster can cause cutting unit 10 to move up to the start position of the cutting action set through the dedicated dial.

Moreover, electrical cable cutter 1 may further include a function input unit for turning the function in S105 illustrated in FIG. 2 on and off depending on the usage of the operator. In other words, electrical cable cutter 1 may further include a switch unit for turning the function in S105 on and off based on an external instruction and the like. Note that in the present embodiment, the turning on and off of the function in S105 can be achieved by further including in the drive mechanism a switch unit (a switch and so on) including a switch circuit that can turn the function for causing the electric motor in the drive mechanism to reverse on and off.

Moreover, in electrical cable cutter 1 according to the present embodiment, by further including this function input unit or reverse input unit 22, the operator can freely cause cutting unit 10 to move in the direction of the standby position prior to the start of the cutting action. Therefore, the versatility of the cutting by the operator is improved during cutting.

Here, the cutting action is preferably detected (detection of the end of the cutting action in S102) by detecting both the cutting start and end performed on cutting target 2 by cutting unit 10.

FIG. 3 is an outline diagram for describing an example of detecting the end of the cutting action of electrical cable cutter 1 according to the present embodiment.

As illustrated in FIG. 3, the detection of the end of the cutting action of electrical cable cutter 1 according to the present embodiment, that is, the detection of the start and end of cutting of cutting target 2 by cutting unit 10, is performed by detecting the value of the motor load current, which is the current for causing the electric motor to move. In other words, the start of cutting of cutting target 2 by cutting unit 10 is detected when the motor load current is greater than or equal to a predetermined value (or in a predetermined range) during or after the start of cutting. Furthermore, the end of cutting of cutting target 2 by cutting unit 10 is detected when the motor load current is less than the predetermined value (or in a predetermined range). When both the cutting start and end are detected, it is determined that the end of the cutting action has been detected in S102 of FIG. 2.

In this manner, detecting both the start and end of cutting makes determining in the case where the cutting action has ended easy, and thus preferable.

Note that in the above embodiment (FIG. 1), electrical cable cutter 1 includes reverse input unit 22, but may also not include reverse input unit 22. Similarly, electrical cable cutter 1 need not include lock knob 23.

Moreover, in the above embodiment, cutting unit 10 has a retractable structure, but may also have a scissor-like structure that cuts cutting target 2 by clamping on it.

Moreover, the present invention can be suitably applied not only to cable cutters, but also to other power tools (such as reinforcing steel cutters) that include the above cutting unit that moves in a fashion described above.

Note that in the present invention, the concept of "cable" includes not only cables, but also steel rods and the like.

### [Second Mode]

Hereinafter, the electrical cable cutter according to another embodiment (a second mode) of the power tool in the present invention will be described with reference to the drawings. Note that each of the embodiments described below shows a preferred specific example in the present invention. Numerical values, shapes, materials, components, placement and connection of the components, the processes of controllers and their order, and the like are mere examples and are not intended to limit the present invention. Moreover, components in the following embodiments not mentioned in any of the independent claims that define the broadest concepts are described as optional elements. Note that the drawings are schematic diagrams and do not necessarily provide strictly accurate illustrations.

Hereinafter, a configuration of electrical cable cutter 1A according to the present embodiment will be described concretely below. FIG. 4 is an outline diagram showing the configuration of electrical cable cutter 1A according to the present embodiment.

As illustrated in FIG. 4, electrical cable cutter 1A includes cutting unit 11 that performs a cutting action, and cutting action input unit 20A for turning the cutting action on and off. Moreover, cutting action input unit 20A, when turned on, causes cutting unit 11 to move in the direction of the end position of the cutting action (direction A in FIG. 4), and when turned off, causes cutting unit 11 to move in the direction of the standby position prior to the start of the cutting action (direction B in FIG. 4). Furthermore, in cutting action input unit 20A, a plurality of switchable movement amounts for causing cutting unit 11 to move in the standby position direction B (hereinafter also referred to as return amount) are set.

Note that "the direction of the end position of the cutting action" is the direction toward the end position of the cutting action when cutting unit 11 cuts cutting target 2A, that is, the direction in which cutting unit 11 cuts cutting target 2A. Moreover, "the direction of the standby position prior to the start of the cutting action" is the direction toward the start position of the cutting action when cutting unit 11 cuts cutting target 2A, that is, the direction opposite to the direction in which cutting unit 11 cuts cutting target 2A.

In this manner, in electrical cable cutter 1A according to the second mode of the power tool in the present invention, a preferred return amount can be selected according to the cutting conditions of cutting unit 11 since a plurality of switchable return amounts are set.

Therefore, a decrease in productivity can be reduced since the power tool can be made more versatile. Moreover, since the returning to an optimal position is performed automatically without the operator having to personally use a reverse switch lever or the like, the burden on the operator can be reduced.

The return amount can be set, for example, to four degrees (from setting 1 to setting 4).

In electrical cable cutter 1A, the return amount is preferably adjusted by controlling the movement time (electric power supply time) for causing cutting unit 11 to move in the standby position direction B.

To be specific, the return amount is preferably adjusted by disposing an adjustment circuit for adjusting the electric power supply time from battery cartridge 60A to the movement mechanism (motor and the like) which causes cutting unit 11 to move, on the electric power supply line between the movement mechanism and battery cartridge 60A, and controlling the adjustment circuit.

By controlling the movement time (electric power supply time) of the return amount in this manner, the need to install sensors and the like for detecting cutting unit 11 at positions of desired return amounts is eliminated, and thus complication of electrical cable cutter 1A can be reduced and cost reduction becomes possible.

Selection of the return amount through the movement time (electric power supply time) is performed, for example, using selection dial 55A provided on handle 50A (see, FIG. 4).

Selection dial 55A is, for example, marked with settings "1", "2", "3", and "4", and each setting is set to a corresponding electric power supply time via the adjustment circuit (for example, "1" is 10 seconds, "2" is 20 seconds, "3" is 30 seconds, and "4" is 40 seconds). For example, the operator selects a desired setting (for example, "1") of selection dial 55A prior to the cutting start of cutting target 2A, and when, after the cutting action (after cutting action input unit 20A has been turned on), cutting action input unit 20A is turned off, electric power is supplied from battery cartridge 60A to the movement mechanism for the amount of time corresponding to the selected setting (for example, 10 seconds) and cutting unit 11 is caused to move in standby position direction B for that amount of time.

Note that selection dial 55A may also be provided on the surface of handle 50A to which battery cartridge 60A is coupled (between handle 50A and battery cartridge 60A in FIG. 4, and thus not illustrated).

The selection of the return amount is not limited to the use of selection dial 55A, so long as it does not depart from the scope in the present invention. The selection of the return amount may also be performed, for example, using a selection push switch (for example, marked with the numbers "1", "2", "3", and "4", in which the number changes (for example, "from 1 to 2 to 3 to 4 to 1") each time the switch is pushed) or a digital selector (for example, digitally displaying the numbers "1", "2", "3", and "4", and selecting one thereof).

The selection of the return amount when successively cutting cutting target 2A is performed, for example, by having the operator select a desired setting prior to the cutting start of cutting target 2A to be cut next (includes changing the setting of the previous return amount to another setting).

In electrical cable cutter 1A, the selection of the return amount is more preferably performed by using information about at least one of cutting unit 11, cutting target 2A cut by cutting unit 11, and the remaining power level. In other words, in electrical cable cutter 1A, the desired return amount is automatically selected from the plurality of preset return amounts using information relating to at least one of cutting unit 11, cutting target 2A, and the remaining power level. Note that the remaining power level of electrical cable cutter 1A is the remaining battery charge of battery cartridge 60A (dischargeable capacity).

By automatically performing the selection of the return amount, an optimal return amount can be selected according to the conditions of cutting unit 11, cutting target 2A, and the remaining power level.

Therefore, work efficiency when successively cutting cutting target 2A can be further improved. Moreover, since the operator need not personally select the return amount using selection dial 55A or the like, the burden on the operator can be further reduced.

Hereinafter, a specific mode when automatically performing the selection between the plurality of preset return amounts will be described.

FIG. 5 is a flowchart showing an example of selecting between the plurality of preset return amounts based on information about cutting unit 11.

As illustrated in FIG. 5, when coupling cutting unit 11 to electrical cable cutter 1A in which, for example, four return amounts are set (S201), the shape of rotary blade 10AB (especially the shape of the portion that comes into contact with cutting target 2A (10AB1 in FIG. 4)) is detected as information about cutting unit 11 by an image sensor (CCD camera and the like) not illustrated in the drawing that is provided inside housing 40A (S202). Next, when the detected shape of rotary blade 10AB is curved as illustrated in FIG. 4, there are cases where it is difficult to insert cutting target 2A to be cut next into cutting space 10AD of electrical cable cutter 1A (cutting target 2A to be cut next easily comes into contact with the curved portion of the blade when inserting cutting target 2A into cutting space 10AD), and thus a large return amount (setting 3 or setting 4) is selected (S203).

When the detected shape of rotary blade 10AB is straight, cutting target 2A is easily inserted into cutting space 10AD (cutting target 2A to be cut next does not easily come into contact with the straight portion of the blade when inserting cutting target 2A into cutting space 10AD), and thus the smallest possible return amount (setting 1 or setting 2) in which cutting target 2A to be cut next can be inserted into cutting space 10AD is selected (S204). Moreover, when setting a large return amount (setting 3 or setting 4) has been selected (S203), the curvature radius of blade shape 10AB1 that comes into contact with cutting target 2A of cutting unit 11 is further detected (S205). When the detected curvature radius is less than a preset threshold value, a large return amount (setting 4) is selected (S206) to make it easier to avoid contact with cutting target 2A, and when the detected curvature radius is greater than the preset threshold value, a small return amount (setting 3) is selected (S207) since it is easy to avoid contact with cutting target 2A.

FIG. 6 is a flowchart showing another example of selecting between the plurality of preset return amounts based on information about cutting unit 11.

As illustrated in FIG. 6, when coupling cutting unit 11 to electrical cable cutter 1A in which, for example, four return amounts are set (S301), the product number that is engraved or numbered on the surface of cutting unit 11 is detected as information about cutting unit 11 by an image sensor (CCD camera and the like) not illustrated in the drawing that is provided inside housing 40A (S302). Next, the detected product number and the preset return amount corresponding to the product number is referred to (S303), and a return amount is selected (S304).

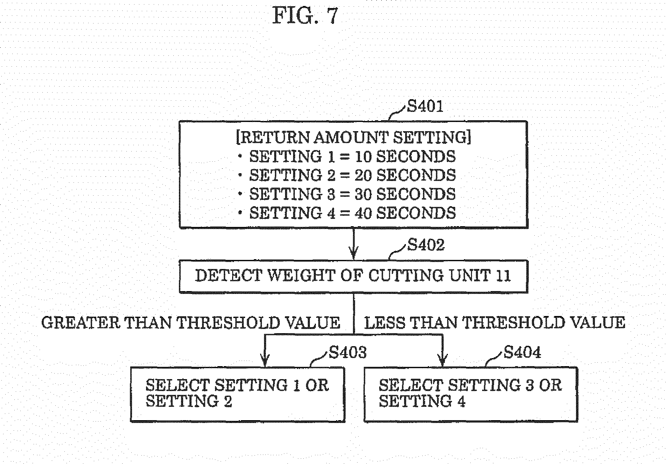

FIG. 7 is a flowchart showing another example of selecting between the plurality of preset return amounts based on information about cutting unit 11.

As illustrated in FIG. 7, when coupling cutting unit 11 to electrical cable cutter 1A in which, for example, four return amounts are set (S401), the weight of cutting unit 11 is detected as information about cutting unit 11 by a weight sensor not illustrated in the drawing that is provided inside housing 40A (S402). Next, when the detected weight is greater than a preset threshold value, the smallest possible return amount (setting 1 or setting 2) that enables cutting target 2A to be inserted into cutting space 10AD is selected (S403) in order to reduce power consumption. When the detected weight is less than the preset threshold value, a large return amount (setting 3 or 4) is selected (S404) since the power consumption is low.

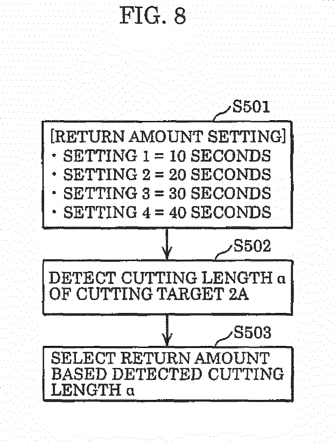

FIG. 8 is a flowchart showing another example of selecting between the plurality of preset return amounts based on information about cutting target 2A.

As illustrated in FIG. 8, a cutting length (α in FIG. 4) is detected (5502) by an image sensor (CCD camera and the like) not illustrated in the drawing as information about cutting target 2A to be inserted into cutting space 10AD of electrical cable cutter 1A in which, for example, four return amounts are set (5501). Next, the smallest possible return amount that enables cutting target 2A to be inserted into cutting space 10AD is selected (5503) based on the detected cutting length o.

FIG. 9 is a flowchart showing an example of selecting between the plurality of preset return amounts based on the remaining power level of electrical cable cutter 1A.

As illustrated in FIG. 9, using a detection means not illustrated in the drawing in electrical cable cutter 1A in which, for example, four return amounts are set (S601), the remaining power level is detected (S602). Next, when the detected remaining power level is less than a preset threshold value, a setting with a long electric power supply time (setting 3 or setting 4) is selected (S603) since there is a risk of the return speed of cutting unit 11 dropping (decreased return amount). When the detected remaining power level is greater than the preset threshold value, the smallest possible return amount that enables cutting target 2A to be inserted into cutting space 10AD (setting 1 or setting 2) is selected (S604) since there is a low probability of the return speed of cutting unit 11 dropping.

Moreover, when the selection between the plurality of preset return amounts is performed automatically based on information about cutting unit 11 (for example, product number) and cutting target 2A (cutting length), as illustrated in FIG. 6, a return amount corresponding to the product number of cutting unit 11 is selected (S304), then the cutting length (a in FIG. 4) is, for example, detected (S502A) by an image sensor (CCD camera or the like) not illustrated in the drawing as information about cutting target 2A to be inserted into cutting space 10AD. Next, the selected return amount is, for example, changed to a return amount that enables cutting target 2A to be inserted into cutting space 10AD (S503A) based on the detected cutting length o.

By adopting such a flowchart, an optimal return amount can be selected even when cutting unit 11 has been changed to one with a different blade shape (with a different product number), and cutting target 2A has been changed to a cutting target with a different cutting length o.

FIG. 10 is a flowchart showing an example of selecting between the plurality of preset return amounts based on information about cutting unit 11 and the remaining power level.

When coupling cutting unit 11 to electrical cable cutter 1A in which, for example, four return amounts are set (S301A), the product number that is engraved or numbered on the surface of cutting unit 11 is detected as information about cutting unit 11 by an image sensor (CCD camera and the like) not illustrated in the drawing that is provided inside housing 40A (S302A). Next, Next, the detected product number and the preset return amount corresponding to the product number is referred to (S303A), and a return amount is selected (S304A). Next, the remaining power level of electrical cable cutter 1A is detected (S602A) using a detection means not illustrated in the drawings; when the detected remaining power level is less than the preset threshold value, the selected return amount is changed to a setting with a long electric power supply time (S603A), and when the detected remaining power level is greater than the preset threshold value, the selected return amount is not changed (S604A).

By adopting such a flowchart, a return amount that enables successive cutting is maintained even when the remaining power level becomes low and the return speed of cutting unit 11 drops (decreased return amount).

FIG. 11 is a flowchart showing an example of selecting between the plurality of preset return amounts based on information about cutting target 2A and the remaining power level.

The cutting length (a in FIG. 4) is detected (S502A) by an image sensor (CCD camera and the like) not illustrated in the drawings as information about cutting target 2A to be inserted into cutting space 10AD of electrical cable cutter 1A in which, for example, four return amounts are set (S501A). Next, the smallest possible return amount that enables cutting target 2A to be inserted into cutting space 10AD is selected (S503A) based on the detected cutting length a.

Next, the remaining power level of electrical cable cutter 1A is detected (S602A) using a detection means not illustrated in the drawings; when the detected remaining power level is less than the preset threshold value, the selected return amount is changed to a setting with a long electric power supply time (S603A), and when the detected remaining power level is greater than the preset threshold value, the selected return amount is not changed (S604A).

By adopting such a flowchart, a return amount that enables successive cutting is maintained even when remaining power level becomes low and the return speed of cutting unit 11 drops (decreased return amount).

Note that the various types of controls related to the cutting action of electrical cable cutter 1A, such as the above-mentioned adjustment and selection of the return amount, are, for example, performed via the instructions of a controller (above-mentioned adjustment circuit, or a control circuit, a processor, or the like) not illustrated in the drawings that is disposed in electrical cable cutter 1A.

Cutting unit 11 is coupled to the upper portion of a resin (plastic) housing 40A, and includes, for example, fixed blade 10AA fixed to the end portion of housing 40A using a commonly-known means not illustrated in the drawings, and rotary blade 10AB that is substantially fan-shaped and rotatably connected at approximately the center of curvature of the arc of this fan shape by connector 10AC disposed on the end portion of fixed blade 10AA.

Included inside housing 40A is a commonly-known drive mechanism ((i) including, for example, the electric motor as illustrated in Japanese Patent No. 3780391, the clutch mechanism driven by the driving gear of the electric motor, the planetary gear deceleration mechanism driven via the clutch mechanism, and the driving gear that is connected to the planetary gear deceleration mechanism and protrudes from the end portion of housing 40A, and (ii) in which the plurality of constrained gears, which are driven by the driving gear of the planetary gear deceleration mechanism, sequentially mesh with the gear teeth formed on the outer edge of the arc of the rotary blade and cause the rotary blade to rotate about the axis, are disposed along the rotation trajectory of the outer edge of this rotary blade) not illustrated in the drawings that drives the movement of cutting unit 11 (rotation of rotary blade 10AB in the present embodiment).

Electrical cable cutter 1A according to the present embodiment cuts cutting target 2A, such as a cable, by moving cutting unit 11 driven by the electric motor. Note that the driving power of the electric motor is, for example, supplied from battery cartridge 60A detachably mounted on handle 50A which is disposed across housing 40A from cutting unit 11. Battery cartridge 60A is detachably mounted on the side of handle 50A which is opposite to the side facing housing 40A.

Cutting action input unit 20A is, for example, disposed on the outer surface of handle 50A.

In the present embodiment, by turning on (preferably pressing) cutting action input unit 20A, the drive mechanism is activated and cutting unit 11 moves in the direction of the end position of the cutting action. Moreover, by turning off (preferably releasing from the pressed state) cutting action input unit 20A, cutting unit 11 is caused to move in the direction of the standby position of the cutting action at the time when cutting action input unit 20A is turned off. In other words, cutting action input unit 20A, when turned off, causes cutting unit 11 to move in the direction of the standby position prior to the start of the cutting action by a movement amount selected from the plurality of preset movement amounts.

As illustrated in FIG. 4, electrical cable cutter 1A according to the present embodiment further includes, aside from cutting action input unit 20A, reverse input unit 22A which, by being turned on (preferably being pressing) reverses the electric motor in the drive mechanism to thereby cause cutting unit 11 to move in the direction of the standby position prior to the start of the cutting action, and by being turning off (preferably by being released from the pressed state) stops the movement in the direction of the standby position.

By further including this reverse input unit 22A, a decrease in work efficiency can be kept to a minimum since the operator can personally adjust the movement amount in the direction of the standby position of cutting unit 11 even when some sort of malfunction occurs during the cutting action.

Moreover, electrical cable cutter 1A may further include lock knob 23A that puts one of cutting action input unit 20A and reverse input unit 22A in the on state by being pressing simultaneously with the one of cutting action input unit 20A and reverse input unit 22A. By including this lock knob 23A, the safety of electrical cable cutter 1A during operation can be further improved.

In the cutting by electrical cable cutter 1A according to the present embodiment, the operator, for example, holds handle 50A with battery cartridge 60A mounted thereon with one hand, and places cutting target 2A between fixed blade 10AA and rotary blade 10AB of cutting unit 11. The cutting action is performed by turning on cutting action input unit 20A.

With this, rotary blade 10AB is pulled into fixed blade 10AA by the drive mechanism and cutting target 2A can be cut.

Note that in the above embodiment (FIG. 4), electrical cable cutter 1A includes reverse input unit 22A, but may also not include reverse input unit 22A. Similarly, electrical cable cutter 1A need not include lock knob 23A.

Moreover, in the above embodiment, cutting unit 11 has a retractable structure, but may also have a scissor-like structure that cuts cutting target 2A by clamping on it.

Moreover, the present invention can be suitably applied not only to cable cutters, but also to other power tools (such as reinforcing steel cutters) that include the above cutting unit that moves in a fashion described above.

Note that in the present invention, the concept of "cable" includes not only cables, but also steel rods and the like.

### [Third Mode]

Hereinafter, the electrical cable cutter according to another embodiment (a third mode) of the power tool in the present invention will be described with reference to the drawings. Note that each of the embodiments described below shows a preferred specific example in the present invention. Numerical values, shapes, materials, components, placement and connection of the components, the processes of controllers and their order, and the like are mere examples and are not intended to limit the present invention. Moreover, components in the following embodiments not mentioned in any of the independent claims that define the broadest concepts are described as optional elements. Note that the drawings are schematic diagrams and do not necessarily provide strictly accurate illustrations.

A configuration of electrical cable cutter 1B according to the present embodiment will be described concretely below. FIG. 12 is an outline diagram showing the configuration of electrical cable cutter 1B according to the present embodiment.

Electrical cable cutter 1B according to the present embodiment has a configuration in which cutting action input unit 20A described in the second mode is replaced with cutting action input unit 20B. Everything else is the same as in the second mode, and as such, description thereof is omitted. Moreover, in cutting action input unit 20B, other matters such as the configuration in which a plurality of switchable movement amounts for causing cutting unit 11 to move in the standby position direction B (i.e., return amount) are set, and the selection between the movement amounts (including automatic selection) are all identical to cutting action input unit 20A, and as such, description thereof is omitted.

Cutting action input unit 20B of electrical cable cutter 1B according to the present embodiment, when turned on, causes cutting unit 11 to move in the direction of the end position of the cutting action (direction A in FIG. 12), and when turned off, causes cutting unit 11 to stop moving in the case where the cutting action has not ended at the time when the cutting action input unit is turned off, and to move in the direction of the standby position prior to the start of the cutting action (direction B in FIG. 12) in the case where the cutting action has ended at the time when the cutting action input unit is turned off. Moreover, a plurality of switchable movement amounts for causing cutting unit 11 to move in the standby position direction B (return amounts) are set. In other words, cutting action input unit 20B, when turned off, causes cutting unit 11 to move in the direction of the standby position prior to the start of the cutting action by a movement amount selected from the plurality of preset movement amounts in the case where the cutting action has ended at the time when the cutting action input unit is turned off.

In this manner, in electrical cable cutter 1B according to this embodiment of the power tool in the present invention, even when cutting action input unit 20B is turned off before the cutting action performed on cutting target 2A has ended, movement of cutting unit 11 in the direction of the end position of the cutting action is stopped and cutting unit 11 does not move in the direction of the standby position prior to the start of the cutting action, and thus the previously mentioned decrease in work efficiency can be reduced. Moreover, in electrical cable cutter 1B, since cutting unit 11 automatically moves in the direction of the standby position prior to the start of the cutting action, after the cutting action has ended, the operator does not have to put a reverse switch lever in the on state each time to return the cutter to the standby position prior to the start of the cutting action. Therefore, the burden on the operator can be reduced.

Moreover, in electrical cable cutter 1B according to the third mode of the power tool in the present invention, a preferred return amount can be selected according to the cutting conditions of cutting unit 11 since a plurality of switchable return amounts are set. Therefore, a decrease in productivity can be reduced since the power tool can be made more versatile. Moreover, since the returning to an optimal position is performed automatically without the operator having to personally use a reverse switch lever or the like, the burden on the operator can be further reduced.

In the present embodiment, by turning on (preferably pressing) cutting action input unit 20B, the drive mechanism is activated and cutting unit 11 moves in the direction of the end position of the cutting action. Moreover, by turning off (preferably releasing from the pressed state) cutting action input unit 20B, movement of cutting unit 11 in the direction of the end position of the cutting action is stopped by deactivating the drive mechanism (more specifically, stopping the power supply from battery cartridge 60A to the electric motor) in the case where the cutting action has not ended at the time when cutting action input unit 20B is turned off. Moreover, a plurality of selectable movement amounts are set for causing cutting unit 11 to move in the direction of the standby position prior to the start of the cutting action and to move in the standby position direction B, by reversing the electric motor in the drive mechanism in the case where the cutting action has ended when cutting action input unit 20B is off. In other words, when cutting action input unit 20B is off, cutting unit 11 is caused to move in the direction of the standby position prior to the start of the cutting action by a movement amount selected from the plurality of preset movement amounts, by reversing the electric motor in the drive mechanism in the case where the cutting action has ended.

FIG. 13 is a flowchart showing an example of the cutting action of electrical cable cutter 1B according to the present embodiment. Note that the various types of controls related to the cutting action of electrical cable cutter 1B described below are, for example, performed via the instructions of a controller (control circuit, processor, or the like) not illustrated in the drawings that is disposed in electrical cable cutter 1B.

As illustrated in FIG. 13, in the present embodiment, by turning on cutting action input unit 20B, cutting unit 11 first moves from the standby position prior to the start of the cutting action in the direction of the end position of the cutting action, and thereby cuts cutting target 2A (S701). Next, the end of the cutting action performed on cutting target 2A is detected (S702). When the end of the cutting action performed on cutting target 2A is detected in S702 ("Yes" in FIG. 13), movement of cutting unit 11 in the direction of the end position of the cutting action (S703) is stopped. Subsequently, it is determined whether cutting action input unit 20B (switch in FIG. 13, same hereinafter) is turned off (S704). Next, when it is determined that cutting action input unit 20B is turned off in S704 ("Yes" in FIG. 13), an amount (movement amount) by which cutting unit 11 is caused to move in the direction of the standby position of the cutting action is selected (S705), and cutting unit 11 is caused to move in the direction of the standby position prior to the start of the cutting action based on the selected movement amount (S706). Moreover, when it is determined that cutting action input unit 20B is not turned off in S704 ("No" in FIG. 13), 5703 (stoppage of movement of cutting unit 11) is continued until cutting action input unit 20B is turned off. However, when the end of the cutting action performed on cutting target 2A is not detected in S702 ("No" in FIG. 13), it is determined next whether cutting action input unit 20B is turned off (S707). When it is determined that cutting action input unit 20B is turned off in S707 ("Yes" in FIG. 13), cutting unit 11 is caused to stop moving in the direction of the end position of the cutting action (S708). Moreover, when it is determined that cutting action input unit 20B is not turned off in S707 ("No" in FIG. 13), movement of cutting unit 11 in the direction of the end position of the cutting action is continued until the end of the cutting action is detected in S702.

FIG. 14 is an outline diagram for describing an example of detecting the end of the cutting action of electrical cable cutter 1B according to the present embodiment.

As illustrated in FIG. 14, the detection of the end of the cutting action of electrical cable cutter 1B according to the present embodiment, that is, the detection of the start and end of cutting of cutting target 2A by cutting unit 11, is performed by detecting the value of the motor load current, which is the current for causing the electric motor to move. In other words, the start of cutting of cutting target 2A by cutting unit 11 is detected when the motor load current is greater than or equal to a predetermined value (or in a predetermined range) during or after the start of cutting. Furthermore, the end of cutting of cutting target 2A by cutting unit 11 is detected when the motor load current is less than the predetermined value (or in a predetermined range). When both the cutting start and end are detected, it is determined that the end of the cutting action has been detected in S702 of FIG. 13.

In this manner, detecting both the start and end of cutting makes determining in the case where the cutting action has ended easy, and thus preferable.

Note that in FIG. 13, the selection of the amount (movement amount) by which cutting unit 11 in the present embodiment is caused to move in the direction of the standby position of the cutting action is described as being performed when cutting action input unit 20B (switch in FIG. 13) has been turned off, but the movement amount may also be selected before cutting unit 11 moves in the direction of the end position of the cutting action (S701).

### [Reference Signs List]

- 1, 1A, 1B: Electrical cable cutter
- 2, 2A: Cutting target
- 10, 11: Cutting unit
- 20, 20A, 20B: Cutting action input unit (switch)
- 22, 22A: Reverse input unit
- 23, 23A: Lock knob
- 40, 40A: Housing
- 50, 50A: Handle
- 55A: Selection dial
- 60, 60A: Battery cartridge

## Claims

1. A power tool (1A), comprising:
a cutting unit (11) that performs a cutting action; and
a cutting action input unit (20A) for turning the cutting action on and off, wherein
the cutting action input unit (20A), when turned on, causes the cutting unit (11) to move in a direction (A) of an end position of the cutting action,
**characterized in that**
the cutting action input unit (20A), when turned off, causes the cutting unit (11) to stop moving in a case where it is detected that the cutting action has not ended at a time when the cutting action input unit (20A) is turned off, and to move in a direction (B) of a standby position prior to a start of the cutting action in a case where it is detected that the cutting action has ended at the time when the cutting action input unit (20A) is turned off.

2. The power tool (1A) according to claim 1, further comprising:
a movement amount adjuster for freely adjusting a movement amount in the direction (B) of the standby position of the cutting unit (11).

3. The power tool (1A) according to claim 1 or 2, wherein
the end of the cutting action is detected by detecting both cutting start and end of a cutting target (2A) by the cutting unit (11).

4. The power tool (1A) according to any one of claims 1 to 3, wherein
the cutting action input unit, when turned off, causes the cutting unit to move in the direction of the standby position prior to the start of the cutting action by a movement amount selected from a plurality of preset movement amounts in the case where the cutting action has ended at the time when the cutting action input unit is turned off.

5. The power tool (1A) according to claim 4, wherein
the power tool (1A) adjusts the movement amount by controlling a movement time in which the cutting unit (11) is caused to move in the direction (B) of the standby position.

6. The power tool (1A) according to claim 4 or 5, wherein
the power tool (1A) selects the movement amount further using information about at least one of the cutting unit (20A), a cutting target (2A) of the cutting unit (11), and a remaining power level of the power tool (1A).

## Patentansprüche

1. Elektrowerkzeug (1A), umfassend:
eine Schneideinheit (11) zum Ausführen eines Schneidvorgangs; und
eine Schneidvorgangs-Eingabeeinheit (20A) zum Ein- und Abschalten des Schneidvorgangs, wobei
die Schneidvorgangs-Eingabeeinheit (20A), wenn sie eingeschaltet ist, bewirkt, dass sich die Schneideinheit (11) in eine Richtung (A) einer Endposition des Schneidvorgangs bewegt,
**dadurch gekennzeichnet, dass**
die Schneidvorgangs-Eingabeeinheit (20A), wenn sie abgeschaltet ist, bewirkt, dass die Schneideinheit (11) ihre Bewegung in einem Fall anhält, in dem bestimmt wird, dass der Schneidvorgang noch nicht abgeschlossen ist, wenn die Schneidvorgangs-Eingabeeinheit (20A) abgeschaltet wird, und sich in einer Richtung (B) einer Bereitschaftsposition vor dem Beginn des Schneidvorgangs in einem Fall bewegt, in dem bestimmt wird, dass der Schneidvorgang abgeschlossen ist, wenn die Schneidvorgangs-Eingabeeinheit (20A) abgeschaltet wird.

2. Elektrowerkzeug (1A) nach Anspruch 1, ferner umfassend:
eine Bewegungsbetragseinstellvorrichtung zum freien Einstellen eines Bewegungsbetrags in der Richtung (B) der Bereitschaftsposition der Schneideinheit (11).

3. Elektrowerkzeug (1A) nach Anspruch 1 oder 2, wobei
das Ende des Schneidvorgangs durch Erfassen sowohl des Beginns des Schneidens als auch des Endes des Schneidens eines Schneidobjekts (2A) durch die Schneideinheit (11) erfasst wird.

4. Elektrowerkzeug nach einem der Ansprüche 1 bis 3, wobei
die Schneidvorgangs-Eingabeeinheit, wenn sie abgeschaltet ist, bewirkt, dass sich die Schneideeinheit um einen Bewegungsbetrag, der aus einer Vielzahl von voreingestellten Bewegungsbeträgen ausgewählt ist, in Richtung der Bereitschaftsposition vor dem Beginn des Schneidvorgangs bewegt, wenn der Schneidevorgang zu dem Zeitpunkt, zu dem die Schneidvorgangs-Eingabeeinheit abgeschaltet wird, abgeschlossen ist.

5. Elektrowerkzeug (1A) nach Anspruch 4, wobei
das Elektrowerkzeug (1A) den Bewegungsbetrag durch Steuern eines Bewegungszeitpunkts einstellt, zu der die Schneideeinheit (11) veranlasst wird, sich in die Richtung (B) der Bereitschaftsposition zu bewegen.

6. Elektrowerkzeug (1A) nach Anspruch 4 oder 5, wobei
das Elektrowerkzeug (1A) den Bewegungsbetrag unter Verwendung von Informationen über die Schneideinheit (20A) und/oder ein Schneidobjekt (2A) der Schneideinheit (11) und/oder einen verbleibenden Leistungspegel des Elektrowerkzeugs (1A) auswählt.

## Revendications

1. Outil électrique (1A) comprenant :
une unité de coupe (11) qui effectue une action de coupe ; et
une unité d'entrée d'action de coupe (20A) pour activer et désactiver l'action de coupe, dans lequel
l'unité d'entrée d'action de coupe (20A), lorsqu'elle est activée, provoque le déplacement de l'unité de coupe (11) dans le sens (A) d'une position finale de l'action de coupe,
**caractérisé en ce que**
l'unité d'entrée d'action de coupe (20A), lorsqu'elle est désactivée, fait en sorte que l'unité de coupe (11) cesse de se déplacer dans le cas où il est détecté que l'action de coupe n'est pas terminée au moment où l'unité d'entrée d'action de coupe (20A) est désactivée, et se déplace dans le sens (B) d'une position d'attente avant le début de l'action de coupe dans le cas où il est détecté que l'action de coupe est terminée au moment où l'unité d'entrée d'action de coupe (20A) est désactivée.

2. Outil électrique (1A) selon la revendication 1, comprenant en outre :
un dispositif de réglage de la quantité de mouvement pour ajuster librement une quantité de mouvement dans le sens (B) de la position d'attente de l'unité de coupe (11).

3. Outil électrique (1A) selon la revendication 1 ou 2, dans lequel
la fin de l'action de coupe est détectée par la détection du début et de la fin de la coupe d'une cible de coupe (2A) par l'unité de coupe (11).

4. Outil électrique (1A) selon l'une quelconque des revendications 1 à 3, dans lequel
l'unité d'entrée d'action de coupe, lorsqu'elle est désactivée, provoque le déplacement de l'unité de coupe dans le sens de la position d'attente avant le début de l'action de coupe, d'une quantité de mouvement sélectionnée parmi une pluralité de quantités de mouvement prédéfinies dans le cas où l'action de coupe est terminée au moment où l'unité d'entrée d'action de coupe est désactivée.

5. Outil électrique (1A) selon la revendication 4, dans lequel
l'outil électrique (1A) ajuste la quantité de mouvement en contrôlant un temps de mouvement pendant lequel l'unité de coupe (11) est amenée à se déplacer dans le sens (B) de la position d'attente.

6. Outil électrique (1A) selon la revendication 4 ou 5, dans lequel
l'outil électrique (1A) sélectionne la quantité de mouvement en utilisant des informations sur au moins l'une des unités de coupe (20A), une cible de coupe (2A) de l'unité de coupe (11) et un niveau de puissance restant de l'outil électrique (1A).
